# EUROPÄISCHE PATENTANMELDUNG

(11) **EP 1 213 723 A2**
(43) Veröffentlichungstag der Anmeldung: **12.06.2002**
(21) Anmeldenummer: 01127216.8
(22) Anmeldetag: 16.11.2001
(51) Int. Cl.: G11B 27/34, G11B 33/10, H04N 5/445, H04N 7/088

(54) **Verfahren und Vorrichtung zur Aufzeichnung**

(30) Priorität: 30.11.2000 DE 10059845
(71) Anmelder: GRUNDIG Aktiengesellschaft, 90471 Nürnberg (DE)
(72) Erfinder: Braig, Rudolf, 90471 Nürnberg (DE)

(57) **Zusammenfassung**

Verfahren und Vorrichtung zur Aufzeichnung von audiovisuellen Daten, welche die Verwaltung der aufgezeichneten audiovisuellen Daten ermöglichen.

Zur Erleichterung der Verwaltung wird vorgeschlagen, die zeitlichen Verhältnisse von aufgezeichneten Sendungen oder Filmen, von für eine Aufzeichnung vorgesehenen Sendungen oder Filmen und eine verbleibende Zeitdauer durch graphische Darstellung zu verdeutlichen, wodurch sich eine einfache Verwaltung der aufgezeichneten audiovisuellen Daten ergibt, da die sich ergebenden zeitlichen Verhältnisse intuitiv erfaßt und ohne weitere Überlegungen verstanden werden können.

## Beschreibung

Die vorliegende Erfindung betrifft ein Verfahren und eine Vorrichtung zur Aufzeichnung von audiovisuellen Daten, welche die Verwaltung der aufgezeichneten audiovisuellen Daten ermöglichen.

Es sind Einrichtungen und Verfahren bekannt, welche die Verwaltung von aufgezeichneten audiovisuellen Daten, z. B. von Filmen oder Sendungen, mittels eines Archivsystems ermöglichen. Dazu werden Informationen unter anderem über die Dauer der aufgezeichneten Sendungen erfaßt, gespeichert und ausgewertet. Um einen Benutzer die derart erhaltenen Informationen zugänglich zu machen, kann die den einzelnen Sendungen zugeordnete Dauer mittels der Darstellung entsprechender alphanumerischer Zeichen angezeigt werden. Ebenso kann die gesamte Aufzeichnungsdauer aller Sendungen ermittelt und in alphanumerischer Form angezeigt werden, bzw. die auf einem verwendeten Aufzeichnungsmedium noch für weitere Aufzeichnungen verfügbare Zeitdauer kann angezeigt werden.

Das bekannte Verfahren sowie die Vorrichtung zur Aufzeichnung von audiovisuellen Daten, welche die Verwaltung der aufgezeichneten audiovisuellen Daten ermöglichen, weisen jedoch den Nachteil auf, daß die Anzeige der ermittelten Zeitdauer der einzelnen Programmbeiträge, der gesamten Aufzeichnungsdauer oder der noch verfügbaren Aufzeichnungsdauer mittels alphanumerischer Zeichen für den Benutzer unübersichtlich ist, weshalb er die Gesamtverhältnisse, die sich für den jeweils verwendeten Aufzeichnungsträger oder für mehrere Aufzeichnungsträger ergeben, nicht ohne weitere Überlegungen erfassen kann.

Aus EP-A-0 399 853 ist ein Gerät zur Aufzeichnung und Wiedergabe von einem überschreibbaren Aufzeichnungsmedium mit Absolutadressen und einem Informationsaufzeichnungsbereich für die Informationen selbst, sowie einem TOC-Bereich für Zusatzinformationen, bekannt. Das Gerät ist in derart betreibbar, dass auf einer Anzeigeeinrichtung graphisch die aufgezeichneten Gebiete und aufzeichnungsfreien Gebiete darstellbar sind. Im Weiteren ist eine Wareinrichtung zum Warnen vorhanden, um anzuzeigen, dass eine Position bereits besetzt ist.

Es ist daher Aufgabe der vorliegenden Erfindung, ein Verfahren und eine Vorrichtung zur Aufzeichnung von audiovisuellen Daten anzugeben, welche eine einfache Verwaltung der aufgezeichneten audiovisuellen Daten ermöglichen.

Bei der vorliegenden Erfindung wird diese Aufgabe durch die Merkmale der Ansprüche 1 und 7 gelöst.

Bei der Erfindung wird dabei von der Überlegung ausgegangen, daß Informationen über die Zeitdauer von aufgezeichneten audiovisuellen Daten in graphischer Form dargestellt werden, wobei die Zeitdauer aller zu verwaltender Sendungen oder Filme graphisch dargestellt wird, wobei die Zeitdauer aufgezeichneter Sendungen oder Filme, die Zeitdauer von für eine Aufzeichnung vorgesehenen Sendungen oder Filme sowie eine verbleibende Zeitdauer unterschiedlich dargestellt werden, und die gesamte graphische Darstellung einer insgesamt für Aufzeichnungen zur Verfügung stehenden Gesamtzeitdauer entspricht.

Der Vorteil der Erfindung ist darin zu sehen, daß durch die graphische Darstellung der zeitlichen Verhältnisse von aufgezeichneten Sendungen oder Filmen, von für eine Aufzeichnung vorgesehenen Sendungen oder Filmen und verbleibender Zeitdauer eine einfache Verwaltung der aufgezeichneten audiovisuellen Daten möglich ist, da die sich ergebenden zeitlichen Verhältnisse intuitiv erfaßt und ohne weitere Überlegungen verstanden werden können.

Weitere Vorteile der vorliegenden Erfindung ergeben sich aus den abhängigen Ansprüchen sowie der nachfolgenden Beschreibung einer erfindungsgemäßen Ausführungsform anhand von Figuren.

Es zeigt:
- Fig. 1: eine Ausführungsform einer erfindungsgemäßen Vorrichtung zur Aufzeichnung von audiovisuellen Daten, welche die Verwaltung der aufgezeichneten audiovisuellen Daten ermöglicht,
- Fig. 2: eine erste von der erfindungsgemäßen Vorrichtung erzeugte Anzeige zur Verwaltung der aufgezeichneten audiovisuellen Daten, und
- Fig. 3: eine zweite von der erfindungsgemäßen Vorrichtung erzeugte Anzeige zur Verwaltung der aufgezeichneten audiovisuellen Daten.

Zur Erleichterung des Verständnisses der vorliegenden Erfindung sind in den Figuren nur die Bestandteile der Ausführungsform dargestellt, die im Zusammenhang mit der Erfindung von Bedeutung sind. Gleichartige Bestandteile in unterschiedlichen Figuren sind mit den selben Bezugszeichen gekennzeichnet.

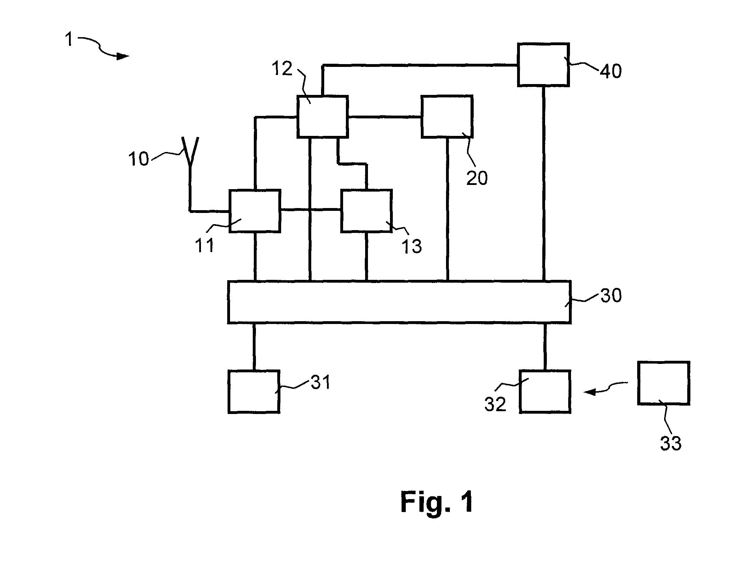

Figur 1 zeigt eine erfindungsgemäße Ausführungsform einer Vorrichtung 1 zur Aufzeichnung und Wiedergabe von audiovisuellen Daten, welche die Verwaltung der aufgezeichneten Daten ermöglicht. Die audiovisuellen Daten können von Audio- und/oder Videosignalen gebildet werden, die in analoger oder digitaler Form vorliegen. Die audiovisuellen Daten können zudem in codierter oder uncodierter Form vorliegen.

Die Vorrichtung 1 weist eine Antenne 10 für den Empfang von audiovisuellen Daten auf, die beispielsweise in Fernsehsignalen enthalten sein können. An die Antenne 10 ist ein Empfangseinrichtung 11, z. B. ein Tuner, angeschlossenen, der dazu dient, eines der empfangenen Fernsehsignale auszuwählen. Am Ausgang des Tuners 11 ist eine Einrichtung zur Signalaufbereitung 12 angeschlossen. Die Signalaufbereitung 12 erzeugt aus dem Fernsehsignal audiovisuelle Daten, die mit der Anzeigeeinrichtung 40, die z. B. aus einem Monitor und/oder Lautsprechern bestehen kann, angezeigt werden können und mittels einer Aufzeichnungseinrichtung 20 aufgezeichnet werden können. Die Aufzeichnungseinrichtung 20 kann alle bekannten Speichermedien umfassen, z. B. magnetische Speicherung auf Band oder Platte, optische oder magnetooptische Speicherung sowie Speicherung in Festkörperspeichern. Die Aufzeichnungseinrichtung 20 wird im Betrieb der Vorrichtung 1 auch für die Wiedergabe der aufgezeichneten Sendungen verwendet.

Weiterhin weist die Vorrichtung 1 eine Einrichtung 13 auf, die mit dem Tuner 11 verbunden ist, und aus dem mit dem Tuner 11 empfangenen Fernsehsignal Zusatzinformationen gewinnt. Die Einrichtung 13 kann beispielsweise von einem Videotextdecoder gebildet werden. Der Ausgang des Videotextdecoders 13 ist mit der Signalaufbereitung 12 verbunden, um die Zusatzinformationen auf der Anzeigeeinrichtung 40 darstellen zu können.

Alle Bestandteile der Vorrichtung 1 werden von einer Steuereinrichtung 30, beispielsweise einem Mikrocomputer, gesteuert. An den Mikrocomputer 30 ist ein Speicher 31 angeschlossen, der die für die Steuerung der Vorrichtung 1 benötigten Programme und Daten enthält. Zusätzlich können Daten vom Mikrocomputer 30 während des Betriebs der Vorrichtung 1 in den Speicher 31 geschrieben werden. Der Speicher 31 enthält einen flüchtigen Teil, der als Arbeitsspeicher verwendet wird, und einen nichtflüchtigen Teil, in welchem die Programme und Daten gespeichert sind bzw. werden. Weiterhin ist eine Bedienungseinrichtung 32, 33 an den Mikrocomputer 30 angeschlossen, welche es einem Benutzer erlaubt die Vorrichtung 1 zu bedienen und steuern. Die Bedienungseinrichtung 32, 33 kann beispielsweise aus einem an den Mikrocomputer 30 angeschlossenen Fernbedienungsempfänger 32 und einem Fernbedienungsgeber 33 bestehen. Der Fernbedienungsgeber 33 steht beispielsweise mittels einer Infrarotverbindung mit dem Fernbedienungsempfänger 32, der einen entsprechenden Infrarotempfänger aufweist, in Verbindung.

Werden die audiovisuellen Daten einer mit dem Tuner 11 empfangenen Sendung eines Fernsehsenders mit der Aufzeichnungseinrichtung 20 aufgezeichnet, wird die Zeitdauer der Sendung von der Steuereinrichtung 30 ermittelt und zusammen mit den audiovisuellen Daten von der Aufzeichnungseinrichtung 20 aufgezeichnet.

Die Zeitdauer der Sendung kann wahlweise oder zusätzlich auch im nichtflüchtigen Teil des Speichers 31 der Steuereinrichtung 30 aufgezeichnet werden. Die Information über die Zeitdauer der Sendung kann auch vom Videotextdecoder 13 aus dem vom Tuner 11 stammenden Fernsehsignal, zusammen mit weiteren Informationen wie Name des Fernsehsenders, Tag und Zeitpunkt der Ausstrahlung der Sendung, Titel der Sendung usw., gewonnen werden. Die weiteren Informationen können zusammen mit der Zeitdauer der Sendung - wie oben beschrieben - von der Aufzeichnungseinrichtung 20 auf dem entsprechenden Speichermedium und/oder im Speicher 31 der Steuereinrichtung 30 gespeichert werden. Werden die Informationen über die Zeitdauer und die weiteren Informationen nur auf dem Speichermedium der Aufzeichnungseinrichtung 20 gespeichert, kann nur die Informationen des jeweils in der Aufzeichnungseinrichtung 20 befindlichen Speichermediums dargestellt werden. Sind die Informationen über die Zeitdauer und die weiteren Informationen im Speicher 31 gespeichert, kann eine Aussage über alle auf allen benutzten Speichermedien aufgezeichneten Sendungen gemacht werden.

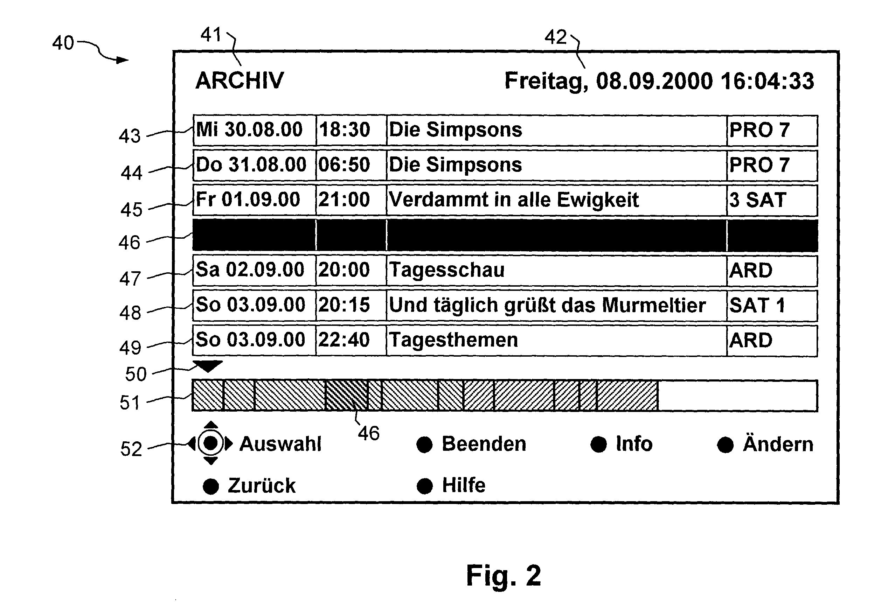

In Figur 2 ist eine erste von der Vorrichtung 1 erzeugte Anzeige zur Verwaltung der aufgezeichneten audiovisuellen Daten, bzw. Sendungen, dargestellt. Diese Anzeige wird von der Steuereinrichtung 30 aus der im Speicher 31 oder auf dem verwendeten Aufzeichnungsmedium gespeicherten Information über die Zeitdauer der aufgezeichneten Sendungen sowie aus den gespeicherten weiteren Informationen erzeugt und betrifft die bereits aufgezeichneten Sendungen. Die Informationen werden von der Steuereinrichtung 30 an den Videotextdecoder 13 weitergeleitet, der die Informationen für die Darstellung in graphische Information umsetzt. Das Ausgangssignal des Videotextdecoders wird an die Signalaufbereitung 12 weitergeleitet, welche ein auf der Anzeigeeinrichtung 40 darstellbares Anzeigesignal erzeugt.

Die mittels der Anzeigeeinrichtung 40 dargestellte Anzeige betrifft alle aufgezeichneten Sendungen, sie ist deshalb als ARCHIV 41 bezeichnet. Zusätzlich werden Datum und Zeitpunkt 42 der Erstellung der Anzeige durch die Steuereinrichtung 30 dargestellt.

Anschließend folgen Informationen über sieben bereits aufgezeichnete Sendungen 43 bis 49. Beispielsweise sind der Tag und Zeitpunkt der Aufzeichnung, der Titel der Sendung sowie der Name des Fernsehsenders dargestellt. Ein Pfeilsymbol 50 weist darauf hin, daß Informationen über weitere Sendungen verfügbar sind und dargestellt werden können. Anschließend folgt eine balkenförmige Darstellung 51, welche Auskunft über die Zeitdauer der einzelnen Sendungen 43 bis 49, der weiteren Sendungen, die durch das Pfeilsymbol 50 angedeutet sind, und noch freiem Speicherplatz gibt. Die Gesamtlänge der balkenförmigen Darstellung 51 entspricht dabei der zur Verfügung stehenden Gesamtdauer für die Aufzeichnung von Sendungen.

Danach folgt ein Bedienungsmenü, das Punkte wie "Auswahl", "Beenden", "Info", "Ändern", "Zurück" und "Hilfe" enthält. Damit ist es möglich, die einzelnen Sendungen auszuwählen, um sie beispielsweise wiederzugeben. Dazu wird ein Zeichen 52 mittels der Tastatur des Fernbedienungsgebers 33 zum jeweils gewünschten Punkt des Bedienungsmenüs bewegt und eine entsprechende Auswahl einer Sendung wird mittels weiterer Tasten getroffen. Eine jeweils ausgewählte Sendung 46 wird besonders gekennzeichnet, z. B. durch inverse Darstellung. Besonders gekennzeichnet wird auch die Zeitdauer der jeweils ausgewählten Sendung 46 in der balkenförmigen Darstellung 51.

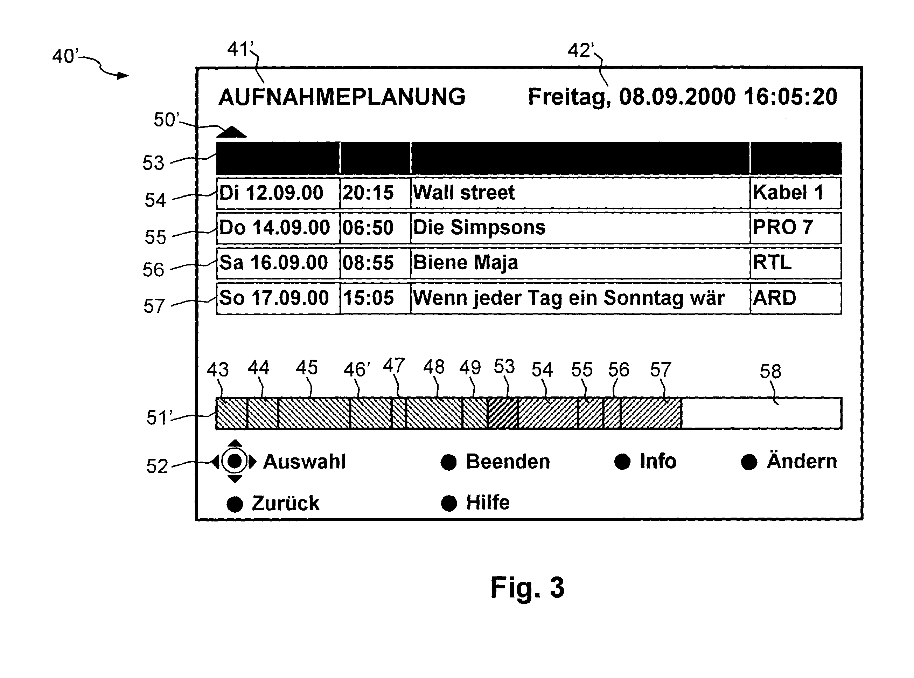

In Figur 3 ist eine zweite von der Vorrichtung 1 erzeugte Anzeige zur Verwaltung der aufgezeichneten audiovisuellen Daten, bzw. Sendungen, dargestellt. Die in der zweiten Darstellung nach Figur 3 aufgeführten fünf Sendungen 53 bis 57 betreffen Sendungen, deren Aufzeichnung programmiert ist, die aber erst zu einem späteren Zeitpunkt aufgezeichnet werden. Es handelt sich daher um eine AUFNAHMEPLANUNG 41' zum angegebenen Zeitpunkt 42'. Das Pfeilsymbol 50' zeigt an, daß vor den aktuell dargestellten Informationen weitere Informationen, z. B. die in Figur 2 dargestellten, verfügbar sind. Die momentan ausgewählte Sendung 53 ist besonders hervorgehoben, z. B. durch inverse Darstellung, ebenso wie die entsprechende Zeitdauer der Sendung 53 in der balkenförmigen Darstellung 51' besonders gekennzeichnet ist.

Die balkenförmige Darstellung 51' umfaßt die sieben bereits aufgezeichneten Sendungen 43 bis 49, die fünf für eine spätere Aufzeichnung vorgesehenen Sendungen 53 bis 57 sowie die noch verfügbare Aufzeichnungsdauer 58 der Aufzeichnungseinrichtung 20. Die Gesamtaufzeichnungszeit der Aufzeichnungseinrichtung 20 wird durch die Gesamtlänge der balkenförmigen Darstellung 51' gekennzeichnet.

Wie in den Figuren 2 und 3 dargestellt, weisen die einzelnen Abschnitte der balkenförmigen Darstellung 51' zur besseren Unterscheidung eine unterschiedliche Darstellung auf, z. B. unterschiedliche Farben. Die Abschnitte 43 bis 49, welche bereits aufgezeichnete Sendungen kennzeichnen, werden rot dargestellt. Die Abschnitte 53 bis 57, welche die Sendungen kennzeichnen, deren Aufzeichnung geplant ist, werden gelb dargestellt. Der Abschnitt 58, welcher die noch verfügbare Aufzeichnungszeit kennzeichnet, wird grün dargestellt. Die jeweils ausgewählte Sendung wird dann beispielsweise in einer helleren Farbe und/oder blinkend dargestellt (Sendung 46 in Figur 2 hellrot; Sendung 53 in Figur 2 hellgelb). Zudem können die einzelnen Abschnitte - wie dargestellt - für die einzelnen Sendungen bzw. Abschnitte unterteilt sein oder durchgehend, ohne Unterteilung, in einer Farbe dargestellt werden.

Zusätzlich kann es auch vorgesehen sein, daß eine Zeitangabe mittels alphanumerischer Zeichen von der Steuereinrichtung 30 erzeugt und auf der Anzeigeeinrichtung 40 dargestellt wird. Beispielsweise kann die Zeitangabe mittels der alphanumerischen Zeichen in den Abschnitten 43 bis 49 und 53 bis 58 der balkenförmigen Darstellung 51 bzw. 51' erfolgen.

Statt die einzelnen Sendungen bzw. Abschnitte in Form eines Balkens darzustellen, ist es auch möglich andere Formen zu wählen. Eine Möglichkeit ist eine kreisförmige Darstellung, bei der die einzelnen Sendungen bzw. Abschnitte als Kreissegmente dargestellt werden, wobei der gesamte Kreis der insgesamt zur Verfügung stehenden Gesamtaufzeichnungszeit entspricht.

Neben den in den Figuren 2 und 3 dargestellten Informationen können weitere Informationen dargestellt werden, z. B. kann es vorgesehen sein, daß für den Fall, daß mehr als ein Speichermedium in der Aufzeichnungseinrichtung 20 verwendt wird, zusätzlich eine Identifikation, z. B. eine Nummer, des jeweiligen Speichermediums angezeigt wird.

Zur Vermeidung einer Fehlbedienung kann es vorgesehen sein, daß für den Fall, daß weitere Sendungen aufgezeichnet werden sollen und die noch zur Verfügung stehende Restzeit 58 nicht ausreicht, ein Warnhinweis ausgegeben wird. Ebenso kann es in diesem Fall vorgesehen sein, daß die älteste Sendung automatisch gelöscht wird oder daß der Benutzer aufgefordert wird, ein neues Speichermedium in die Aufzeichnungseinrichtung 20 einzulegen.

Es ist offensichtlich, daß neben der beschriebenen Aufzeichnung von audiovisuellen Daten in Form von Sendungen, die mittels eines Tuners 11 aus einem Antennensignal 10 gewonnen wurden, auch in beliebig abweichnder Weise gewonnene audiovisuelle Signale aufgezeichnet werden können, z. B. Videofilme oder ähnliches.
Ebenso ist offensichtlich, daß die Anzeigeeinrichtung 40 nicht Bestandteil der Vorrichtung 1 sein muß.

## Patentansprüche

1. Verfahren zur Aufzeichnung von audiovisuellen Daten, welches die Verwaltung der aufgezeichneten audiovisuellen Daten ermöglicht, wobei Informationen über Zeitraum von aufgezeichneten audiovisuellen Daten in graphischer Form dargestellt werden, wobei die Zeitdauer aller zu verwaltenden audiovisuellen Daten graphisch dargestellt wird und die gesamte graphische Darstellung einer insgesamt für die Aufzeichnung zur Verfügung stehenden Gesamtzeitdauer entspricht,
**dadurch gekennzeichnet, daß**
eine Zeitdauer der aufgezeichneten audiovisuellen Daten, eine Zeitdauer von, für eine Aufzeichnung vorgesehenen audiovisuellen Daten, sowie eine Restzeitdauer für noch freien Aufzeichnungsraum unterschiedlich dargestellt werden.

2. Verfahren nach Anspruch 1,
**dadurch gekennzeichnet, daß**
die graphische Darstellung in der Form eines Balkens erfolgt oder die graphische Darstellung in der Form eines Kreises erfolgt.

3. Verfahren nach einem der Ansprüche 1 oder 2,
**dadurch gekennzeichnet, daß**
die Darstellung der Zeitdauer der aufgezeichneten audiovisuellen Daten, der Zeitdauer von für eine Aufzeichnung vorgesehenen audiovisuellen Daten sowie die verbleibende Zeitdauer in unterschiedlichen Farben erfolgt und/oder die Darstellung der Zeitdauer der aufgezeichneten audiovisuellen Daten und die Darstellung der Zeitdauer von für eine Aufzeichnung vorgesehenen audiovisuellen Daten Unterteilungen aufweisen, welche die Zeitdauer der einzelnen audiovisuellen Daten kennzeichnen.

4. Verfahren nach einem der Ansprüche 1 bis 3,
**dadurch gekennzeichnet, daß**
jeweils aktiv ausgewählte audiovisuelle Daten gekennzeichnet werden.

5. Verfahren nach Anspruch 4,
**dadurch gekennzeichnet, daß**
die jeweils aktiv ausgewählten audiovisuelle Daten durch eine andere Farbe und/oder durch Blinken gekennzeichnet werden.

6. Verfahren nach einem der Ansprüche 1 bis 5,
**dadurch gekennzeichnet, daß**
die angezeigte Gesamtzeitdauer der Aufzeichnungsdauer von mindestens einem Aufzeichnungsmedium entspricht.

7. Vorrichtung zur Aufzeichnung von audiovisuellen Daten, welche die Verwaltung der aufgezeichneten audiovisuellen Daten ermöglicht, mit einer Einrichtung zur Gewinnung von audiovisuellen Daten (10, 11, 12) und einer Einrichtung zur Aufzeichnung und Wiedergabe (20) der audiovisuellen Daten, wobei eine Steuereinrichtung (30, 31) vorhanden ist, die über eine Zeitdauer der aufgezeichneten audiovisuellen Daten in einem Speicher (31, 20) speichert,
**dadurch gekennzeichnet, daß**
die Steuereinrichtung (30, 31), eine Zeitdauer von für eine Aufzeichnung vorgesehenen audiovisuellen Daten sowie eine verbleibende Zeitdauer ermittelt und im Speicher (31, 20) speichert, die Steuereinrichtung (30, 31) die gespeicherten Zeitdauern an eine Einrichtung zur Erzeugung eines Anzeigesignals (13, 12) weiterleitet, welche ein Anzeigesignal für eine graphische Darstellung der Zeitdauern erzeugt, wobei die Zeitdauern unterschiedlich dargestellt werden, und die gesamte graphische Darstellung einer insgesamt für die Aufzeichnungen zur Verfügung stehenden Gesamtzeitdauer entspricht.

8. Vorrichtung nach Anspruch 7,
**dadurch gekennzeichnet, daß**
die Einrichtung zur Erzeugung des Anzeigesignals (13, 12) das Anzeigesignal für die graphische Darstellung in der Form eines Balkens erzeugt oder die Einrichtung zur Erzeugung des Anzeigesignals (13, 12) das Anzeigesignal für die graphische Darstellung in der Form eines Kreises erzeugt.

9. Vorrichtung nach einem der Ansprüche 7 oder 8,
**dadurch gekennzeichnet, daß**
die Einrichtung zur Erzeugung des Anzeigesignals (13, 12) das Anzeigesignal für die graphische Darstellung der Zeitdauer der aufgezeichneten audiovisuellen Daten, der Zeitdauer von für eine Aufzeichnung vorgesehenen audiovisuellen Daten sowie die verbleibende Zeitdauer in unterschiedlichen Farben erzeugt und/oder die Einrichtung zur Erzeugung des Anzeigesignals (13, 12) das Anzeigesignal für die graphische Darstellung der Zeitdauer der aufgezeichneten audiovisuellen Daten und die Darstellung der Zeitdauer von für eine Aufzeichnung vorgesehenen audiovisuellen Daten Unterteilungen erzeugt, welche die Zeitdauer der einzelnen audiovisuellen Daten kennzeichnen.

10. Vorrichtung nach einem der Ansprüche 7 bis 9,
**dadurch gekennzeichnet, daß**
eine Einrichtung zur Bedienung (32, 33) vorgesehen ist, welche die Auswahl bestimmter audiovisueller Daten ermöglicht und/oder die Einrichtung zur Erzeugung des Anzeigesignals (13, 12) die jeweils aktiv ausgewählten audiovisuellen Daten kennzeichnet und/oder die Einrichtung zur Erzeugung des Anzeigesignals (13, 12) die jeweils aktiv ausgewählten audiovisuellen Daten durch eine andere Farbe und/oder durch Blinken kennzeichnet.

11. Vorrichtung nach einem der Ansprüche 7 bis 10,
**dadurch gekennzeichnet, daß**
die von der Einrichtung zur Erzeugung des Anzeigesignals (13, 12) erzeugte gesamte graphische Darstellung einer insgesamt für Aufzeichnungen zur Verfügung stehenden Gesamtzeitdauer mindestens eines Aufzeichnungsmediums entspricht.

12. Vorrichtung nach einem der Ansprüche 7 bis 11,
**dadurch gekennzeichnet, daß**
die Einrichtung zur Erzeugung des Anzeigesignals (13, 12) einen Videotextdecoder (13) aufweist.
